# EUROPEAN PATENT APPLICATION

(11) **EP 4 844 604 A1**
(43) Date of publication of application: **25.11.2026**
(21) Application number: 26179066.1
(22) Date of filing: 15.05.2026
(51) Int. Cl.: G06F 16/334, G06F 40/284

(54) **DATA RETRIEVAL**

(30) Priority: 15.05.2025 US 202519208996
(71) Applicant: Ekvall, Markus Niklas, 114 28 Stockholm (SE); Lundberg, Joakim Wilhelm Mikael, 181 34 Lidingö (SE)
(72) Inventor: EKVALL, Markus Niklas, 114 28 Stockholm (SE); LUNDEBERG, Joakim Wilhelm Mikael, 181 34 Lidingö (SE); BERGENSTRÅHLE, Johan Ludvig, Stockholm (SE); TRUONG, Qiaopeng Patrick, Solna (SE); MURRELL, Benjamin Sylvester, Brottby (SE)
(74) Representative: Dehns

(57) **Abstract**

A computer-implemented method of retrieving data from a database. The method comprises receiving a query (101) and generating a plurality of query vectors from the query (101) using a trained non-deterministic-embedding model (112). The non-deterministic-embedding model (112) is configured to generate each query vector as a respective vector in a common embedding space in dependence on the query (101) and a respective randomly-generated value (113). The method also comprises, for each of a plurality of data vectors within the common embedding space, wherein each data vector is associated with a respective data item (105) of the database (104), determining, for each of the plurality of query vectors, a respective similarity value indicative of a similarity of the data vector to the query vector; processing the determined similarity values to identify a set of one or more of the plurality of data vectors; and retrieving, from the database, the respective data item associated with each data vector of the set.

## Description

This invention relates to methods, software and systems for retrieving data from a database in response to a query.

Retrieving data from a database in response to a query by keyword matching can miss relevant results. Vector-based retrieval techniques use machine learning to provide improved data retrieval. Vector techniques search though high-dimensional representations of data items, expressed as respective vectors within a vector space. They can use vector operations to retrieve data (e.g. images, documents, etc.) based on semantic similarity to a query.

However, known approaches can still return irrelevant results and/or miss relevant results. It is therefore desired to find improved methods of retrieving data from a database.

From a first aspect, the invention provides a computer-implemented method of retrieving data from a database, the method comprising:
receiving a query;
generating a plurality of query vectors from the query using a trained non-deterministic-embedding model, wherein the non-deterministic-embedding model is configured to generate each query vector as a vector in a common embedding space in dependence on the query and a respective randomly-generated value;
for each of a plurality of data vectors within the common embedding space, wherein each data vector is associated with a respective data item of the database, determining, for each of the plurality of query vectors, a respective similarity value indicative of a similarity of the data vector to the query vector;
processing the determined similarity values to identify a set of one or more of the plurality of data vectors; and
retrieving, from the database, the respective data item associated with each data vector of the set.

From a second aspect, the invention provides a processing system for retrieving data from a database, wherein the processing system is configured to:
receive a query;
generate a plurality of query vectors from the query using a trained non-deterministic-embedding model, wherein the non-deterministic-embedding model is configured to generate each query vector as a vector in a common embedding space in dependence on the query and a respective randomly-generated value;
for each of a plurality of data vectors within the common embedding space, wherein each data vector is associated with a respective data item of the database, determining, for each of the plurality of query vectors, a respective similarity value indicative of a similarity of the data vector to the query vector;
process the determined similarity values to determine a set of one or more of the plurality of data vectors; and
retrieve, from the database, the respective data item associated with each data vector of the set.

From a further aspect, the invention provides software, optionally stored on a non-transitory computer-readable medium, comprising instructions that, when executed by a processing system, cause the processing system to:
receive a query;
generate a plurality of query vectors from the query using a trained non-deterministic-embedding model, wherein the non-deterministic-embedding model is configured to generate each query vector as a vector in a common embedding space in dependence on the query and a respective randomly-generated value;
for each of a plurality of data vectors within the common embedding space, wherein each data vector is associated with a respective data item of the database, determining, for each of the plurality of query vectors, a respective similarity value indicative of a similarity of the data vector to the query vector;
process the determined similarity values to determine a set of one or more of the plurality of data vectors; and
retrieve, from the database, the respective data item associated with each data vector of the set.

Thus it will be seen that, in accordance with at least some embodiments, a plurality of query vectors is generated from a single query in dependence on the query and a corresponding plurality of randomly-generated values, thereby generating a distribution of embeddings for the query. This dependence on random values means that the embeddings produced by the trained embedding model are non-deterministic (i.e. they do not depend solely on the received query). Preferably the plurality of randomly-generated values are all different values, and the plurality of query vectors are all different vectors. The distribution of query vectors will span a greater extent of the common embedding space than a single query vector does, and may therefore allow for the retrieval of data items (e.g. search results) to be more expansive and/or contextually relevant. This may be particularly significant when the received query subjectively relates to several different regions of the common embedding space, which may be distant from one another. In such a situation, use of only a single query vector would retrieve results either from only one small region, and miss potentially relevant data items outside this region, or would cover a relatively large region, but indiscriminately, and so be likely to return many irrelevant data items. By contrast, generating multiple vector embeddings from a single query within the common embedding space (i.e. within the same embedding space) allows for a more sophisticated search of the vector space.

In some embodiments, the method comprises receiving the query from a user. In some embodiments, the system comprises a user interface for receiving the query from a user (e.g. a keyboard or a microphone). In other embodiments the query may be received (i.e. retrieved) from a memory or may be received over a communication interface. The system may be configured to store part or all of each retrieved data item in a memory and/or to output it over a communication interface. The system may be configured to output part of all of each retrieved data item to a user. It may comprise a user interface for such outputting, e.g. a display, loudspeaker or other visual or audio interface.

In some embodiments, the method comprises inputting the query (e.g. a text string) into a trained query-embedding model, which generates a vector embedding of the query. The trained query-embedding model may have been trained independently of, and optionally before, the training of the non-deterministic-embedding model. The vector embedding of the query may then be provided to the non-deterministic-embedding model for generating the plurality of query vectors. In such embodiments, the non-deterministic-embedding model may be seen as introducing non-determinism to an existing embedding. In other embodiments, the query (e.g. a text string) is provided directly to the non-deterministic-embedding model, which then embeds the query non-deterministically within the common embedding space.

In some embodiments, each data vector is associated with exactly one data item of the database. In some embodiments, the method comprises generating the plurality of data vectors using a trained data-embedding model, wherein the trained data-embedding model generates a respective data vector for each of the data items. In other embodiments, the database may already contain the data vectors (e.g. generated in advance using a trained data-embedding model).

In some embodiments, the trained query-embedding model and the trained data-embedding model are the same model, or are two instances of the same model, while in other embodiments they are two different models that have been trained independently from one another. They may have been trained independently from the non-deterministic-embedding model.

The processing system may comprise one or more processors and a memory storing software instructions for execution by the one or more processors for carrying out any or all of the steps or operations described herein. The processing system may be or comprise a server or a workstation or a personal computer. The database may be part of the processing system or may be provided by a distinct database system. It may be stored locally to the one or more processors, or it may be remote (e.g. coupled to the one or more processors by a wide-area network such as the Internet).

The method may receive a query as an input (e.g. from a user), and output a set of data items from the database that are relevant to the query (e.g. to the user). The data items may be output as a list.

In some embodiments, the query may be received in a format that is unsuitable for inputting (i.e. directly) to the non-deterministic-embedding model or trained query-embedding model. In some embodiments, the method comprises pre-processing the received query to produce a processed query, and providing the processed query to the non-deterministic-embedding model or trained query-embedding model. For example, the processed query may be segmented, e.g. semantically segmented (for example, a sentence may be split into constituent words - i.e. keywords).

In some embodiments, the retrieved data items may be processed by a Retrieval Augmented Generation (RAG) model. The RAG model may be configured to retrieve data relevant to a user request to augment a response generated (e.g. by a large language model) to the user request. By combining methods described herein with a RAG system, the RAG system may be able to retrieve relevant data items from the database to use when generating a response. Since data retrieval according to embodiments of the method described herein may be more comprehensive and/or accurate compared to simplistic methods, such a RAG system may be enhanced thereby. In some embodiments, the processing system comprises a RAG system. It may be configured to generate the query from a request (e.g. a user request). It may be configured to process the retrieved data items when generating a response to the request, which it may output to the user.

In some embodiments, determining a respective similarity value comprises applying a deterministic similarity function to the respective data vector and the query vector. In some embodiments, determining a respective similarity value comprises determining a distance between the data vector and the query vector under a distance measure. Processing the determined similarity values to identify the set of one or more of the plurality of data vectors may comprise identifying one or more data vectors that are within a neighbourhood of one or more of the query vectors. (It may additionally comprise applying one or more further criteria.) Each distance neighbourhood may be defined by a predetermined multi-dimensional distance (e.g. a multi-dimensional radius), within the common embedding space, centred on a respective query vector.

The similarity values may be determined using any appropriate similarity measure. In some embodiments, the similarity values are distances, determined using a distance measure, and the method comprises determining a respective distance between each of the plurality of query vectors and each of the plurality of data vectors within the common embedding space. In such embodiments, for each query vector, a distance between the query vector and each data vector of the plurality is determined. In such embodiments, identifying the set of one or more of the plurality of data vectors comprises processing the determined distances to find data vectors of the plurality of data vectors that are within a predetermined threshold distance of any query vector.

In some embodiments, the non-deterministic-embedding model is or comprises a machine-learning model which may be an artificial neural network. In some embodiments, the non-deterministic-embedding model comprises at least one of: a variational autoencoder, an autoregressive model, a flow-based model, an energy-based model, a generative adversarial network, a diffusion model, or any other suitable generative model. The non-deterministic-embedding model may provide the respective randomly-generated value, or a value derived therefrom, as input to any one or more of these models when generating each query vector of the plurality of query vectors. The non-deterministic-embedding model may comprise a combination of two or more of the above-mentioned models.

Each respective randomly-generated value may be drawn from a common distribution which may be: a Gaussian distribution, a binomial distribution, a uniform distribution, or any other distribution. The system may comprise a true or pseudo random number generator and may be configured to use this to generate the random values (e.g. as respective random numbers output by the random number generator). The same or different statistical distribution may have been used in the training of the non-deterministic-embedding model.

The non-deterministic-embedding model may be configured and/or used to generate the plurality of query vectors serially, or may be configured to generate the plurality of query vectors in parallel. It may be configured to receive or generate, and to process, the plurality of randomly-generated values serially or in parallel.

In some embodiments, the query is or comprises: a string of text, an image, an audio recording, a video file, or another kind of data. In some embodiments, the query may comprise a combination of two or more of these. Thus, in some embodiments, the non-deterministic-embedding model can receive a query in one or more of these data formats and embed the query into a plurality of query vectors.

In some embodiments, the data items of the database comprise respective text documents (e.g. scientific articles). Thus, when a query is received that concerns a particular topic, the method can retrieve text documents that are relevant to the query. However, the data of the database need not be restricted to text documents. The data items of the database may comprise other types of data, such as images, audio files, video files, etc., and the query may be used to retrieve any of these data items. Thus, in some embodiments, the data vectors can represent data items of various kinds of data.

In some embodiments, the query and the data items may be or comprise a same type of data (e.g. both the query and the data items may be strings of text). However, in other embodiments, the query and the data items are not or do not comprise the same type of data. For example, the query may be a string of text, and the data items may be non-text (e.g. images or any other kind of data). Thus, the data retrieval method as described herein is able to take a text-based query and identify relevant non-text data items based on the query.

The query and/or the data items may comprise continuous data, or discrete data, or a combination or both. In some embodiments, when the non-deterministic-embedding model comprises an autoregressive model, the data items and/or the query may comprise discrete data.

In some embodiments, the database comprises two or more sub-databases. In such embodiments, a data vector of each data item of each sub-database is generated and embedded into the common embedding space.

Although some embodiments or instances of the method may identify only a single data vector of the plurality of data vectors, in other embodiments for instance, the method may identify a plurality of the data vectors (i.e. such that the identified set contains two or more data vectors).

In some embodiments, each data vector of the identified set may be identified in dependence upon a similarity of the data vector to only one respective query vector of the plurality of query vectors. However, in other embodiments, at least one, or each, of the data vectors is identified in dependence upon respective similarities of the data vector to two or more, or all, query vectors of the plurality of query vectors.

In some embodiments, identifying the set of one or more of the plurality of data vectors may comprise determining an ordered set of one or more of the plurality of data vectors. The method may comprise processing the determined similarity values to determine a respective score for each data vector of the set and/or each data vector of the plurality of data vectors. It may comprise ordering (i.e. ranking) the data vectors of the set or plurality, e.g. in dependence upon the determined scores. The scores and/or ranking may represent a degree of relevance of each data vector to the query. The method may further comprise outputting the retrieved data items (or parts thereof) as an ordered set (e.g. a list), corresponding to the ordered set of data vectors-e.g. sorted in descending order of relevance to the query.

In some embodiments, the method may comprise processing the determined similarity values to determine a majority-voting count for each data vector of the set and/or plurality of data vectors. It may comprise determining an ordering of an ordered set in dependence upon the majority-voting counts. A score for each data vector may equal or depend on the majority-voting count. The majority-voting count for a data vector may depend on how many query vectors are within a common predetermined distance of the data vector (e.g. according to a distance measure as disclosed herein). Accordingly, data vectors that are close to multiple query vectors may be determined to be more relevant than other data vectors. The more query vectors within the predetermined distance of a respective data vector, the higher the majority-voting count, and therefore the higher the data vector will appear in the ordered set.

In other embodiments, determining the ordered set of one or more of the plurality of data vectors comprises determining, for each data vector of the set, a respective average (e.g. mean or median) distance between the data vector and the plurality of query vectors, and determining an ordering of the ordered set in dependence upon the average distances. In such embodiments, data vectors that have a lower average distance may be considered to be more relevant than data vectors with higher average distances. Therefore, the data vectors with the lowest average distances will correspond to data items that are more relevant to the query.

In some embodiments, determining the similarity value may comprise determining one or more of: a statistical distance, a geometric distance (e.g. Euclidian distance), a cosine similarity, a dot product similarity, or any other suitable measure for similarity.

The common embedding space may be an n-dimensional space, for an integer value of n. When the similarity value is a distance, the determination of the distance may be specific to the dimensions of the common embedding space - i.e. for an n-dimensional common embedding space, the determined distance may be an n-dimensional distance.

In some embodiments, determining the ordered set of one or more of the plurality of data vectors may comprise computing respective likelihoods of the data vectors of the set or plurality under the model distribution, and determining an ordering of the ordered set in dependence upon the computed likelihoods . The computed likelihoods may be conditioned based on a query vector. In one example, when the non-deterministic-embedding model comprises a variational autoencoder, each likelihood may be computed based on an evidence lower bound of a data vector. In another example, when the non-deterministic-embedding model comprises a flow-based generative model, the likelihoods may be computed (e.g. exactly) using a change-of-variables formula, e.g. provided the transformation is invertible and the Jacobian determinant is tractable. The data vectors with higher likelihoods may be determined to be the most relevant.

The method described herein may comprise training the non-deterministic-embedding model. The training may be performed using any method appropriate to an architecture of the non-deterministic-embedding model.

A further aspect provides a computer-implemented method comprising training a non-deterministic-embedding model for use in a method of retrieving data from a database, as disclosed herein.

From a further aspect, the invention provides a processing system configured to train a non-deterministic-embedding model for use in a method of retrieving data from a database, as described herein. The processing system used to train the non-deterministic-embedding model may be the same as, or different from, a processing system used to operate the trained non-deterministic-embedding model for retrieving data from a database.

Such training of a non-deterministic-embedding model may provide a model that can receive an input (i.e. a query) and embed the query as a plurality of query vectors such that the embedding is within a relevant region of a common embedding space. Therefore, in inference, a single query can be input to the trained non-deterministic-embedding model, which uses randomly-generated values to generate a plurality of query vectors that cover a distribution of the original query.

In some embodiments, the non-deterministic-embedding model comprises a plurality of diffusion transformer blocks, and the training comprises providing a time parameter into the model. In other embodiments, the non-deterministic-embedding model comprises a plurality of multilayer perceptron blocks, such as HyperMLP blocks, and the training comprises providing a time parameter into the model.

Features of any aspect or embodiment described herein may, wherever appropriate, be applied to any other aspect or embodiment described herein. Where reference is made to different embodiments or sets of embodiments, it should be understood that these are not necessarily distinct but may overlap.

Certain preferred embodiments of the invention will now be described, by way of example only, with reference to the accompanying drawings, in which:
FIG. 1 is a schematic block diagram of a system for retrieving data according to an embodiment of the present invention;
FIG. 2 is a schematic block diagram showing components of a retrieval module according to an embodiment of the present invention;
FIG. 3 is a diagram showing an embedding of a query according to a simplistic approach for vector-based data retrieval;
FIG. 4 is a diagram showing an embedding of a query according to an embodiment of the present invention; and
FIG. 5 is a flowchart showing a method for implementing an embodiment of the present invention.

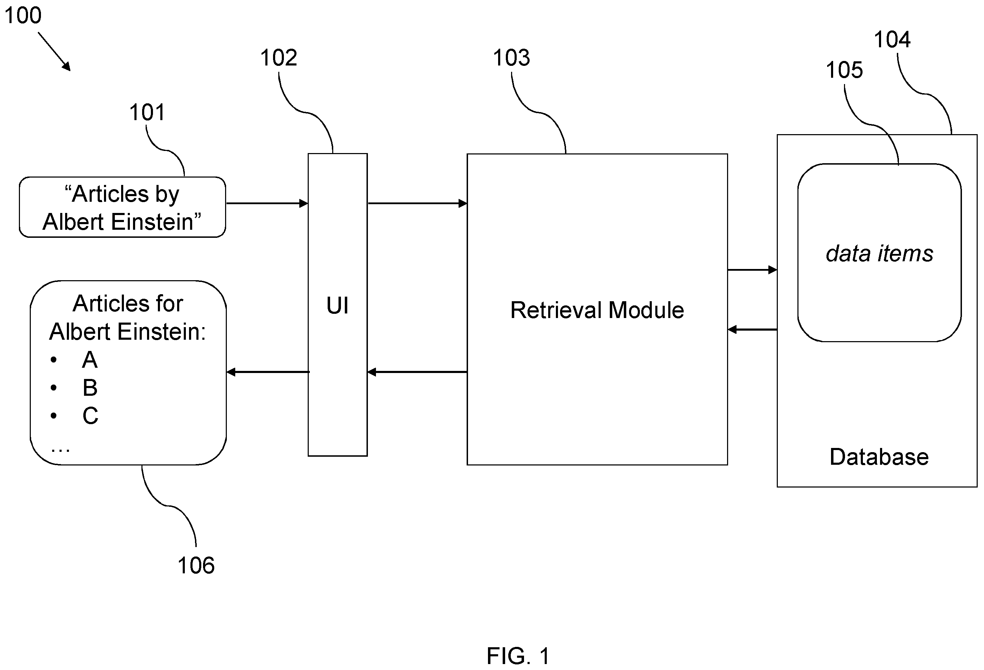

FIG. 1 shows a block diagram of a processing system 100 for retrieving data according to an embodiment of the invention. The processing system 100 may comprise one or more processors, which may include a CPU and/or GPU and which may be distributed or localised, and memory storing software for execution by the one or more processors. The various modules and components described herein may be implemented on the same processor(s) or on different respective processors. Some operations described herein may be carried out by dedicated analogue or digital hardware circuitry (e.g. a DSP or ASIC) rather than by software.

In some embodiments, in operation, the processing system 100 receives a query 101 that is provided by a user as an input through a user interface 102 (e.g. comprising a keyboard, microphone or touchscreen). The user interface 102 is communicably coupled to a retrieval module 103, and the retrieval module 103 is communicably coupled to a database 104 containing data items 105 (i.e. individual data entries). The user interface 102 may be local to or remote from the retrieval module 103 (e.g. the user interface 102 may be provided by a client device and the retrieval module 103 may be provided by a networked server). The database 104 may be local to the retrieval module 103 (e.g. stored in a memory of a processing system that provides the retrieval module 103) or remote (e.g. accessed over a local or wide area network). Using the query 101 and the retrieval module 103, the system 100 can provide an output 106 to the user from the user interface 102 (e.g. comprising a loudspeaker or display) that includes an ordered list of data items 105, retrieved from the database 104, that are relevant to the query 101.

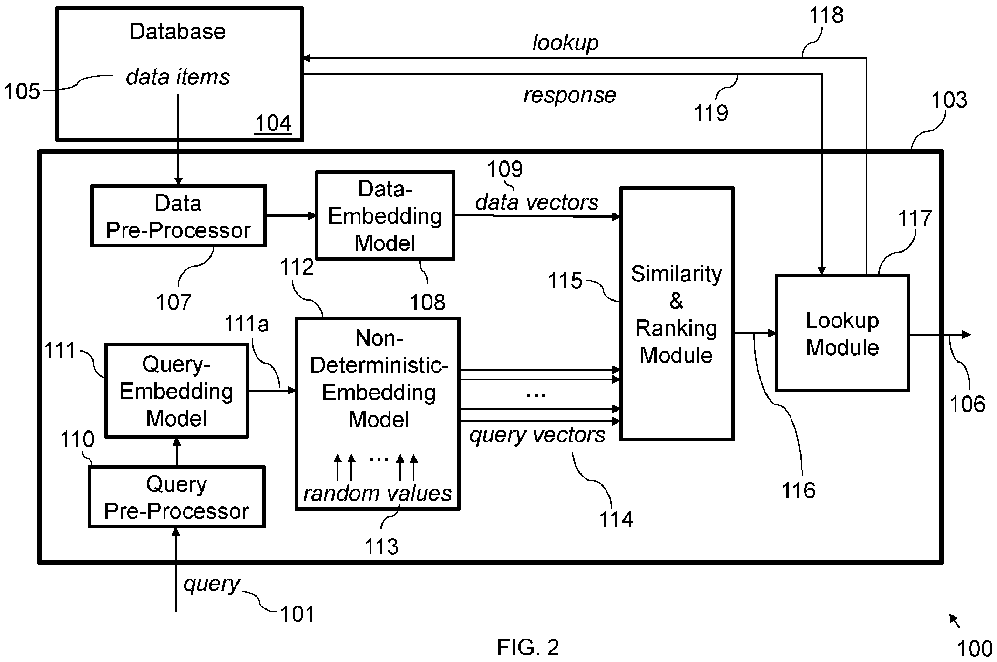

FIG. 2 is a block diagram of the retrieval module 103 and database 104. Either in response to a query 101, or at an earlier point in time, the retrieval module 103 retrieves data items 105 from the database 104. As explained in more detail below, the data items 105 are provided to a data pre-processor 107, which provides an output to a data-embedding model 108. The data-embedding model 108 is pre-trained to take each pre-processed data item and generate a respective data vector representing the data item. Being "pre-trained" here means have been trained independently from, and optionally in advance of, the training of the non-deterministic-embedding model 112 which is described below. The data-embedding model 108 makes these data vectors 109 available to a similarity-and-ranking module 115, as will be described in more detail below. The data vectors 109 share a common dimensionality and are embedded within a common embedding space.

FIG. 2 shows the retrieval module 103 generating the data vectors 109 using the data-embedding model 108; however, in other embodiments, the data vectors 109 could be generated away from the processing system 100 and stored in the database 104, e.g. alongside their respective data items 105, before being provided to the retrieval module 103 for direct access by the similarity-and-ranking module 115. The data pre-processor 107 and data-embedding model 108 may be omitted in such embodiments.

As explained in more detail below, the received query 101 is first provided to a query pre-processor 110 which provides an output to a query-embedding model 111. The query-embedding model 111 is pre-trained to generate a vector 111a based on the output from the query pre-processor 110. This is then provided to a non-deterministic-embedding model 112. The non-deterministic-embedding model 112 has been trained-independently from the query-embedding model 111-to use the vector 111a output from the query-embedding model 111 and a set of randomly-generated values 113 to generate a non-deterministic plurality of query vectors 114 that all have a common dimensionality and that are all embedded within the same common embedding space as the plurality of data vectors 109.

FIG. 2 shows the non-deterministic-embedding model 112 receiving the vector 111a output of the query-embedding model 111 as an input; however, in other embodiments, the non-deterministic-embedding model 112 could instead by configured and trained to receive a query 101 directly and to generate a plurality of query vectors 114 from the received query 101. The query-embedding model 111 may be omitted in such embodiments.

A similarity-and-ranking module 115 receives i) the data vectors 109 that represent the data items 105 and ii) the plurality of query vectors 114. As will be described in more detail below, the similarity-and-ranking module 115 determines, for data vector 109, a similarity with each query vectors 114, and then processes the determined similarities to identify and rank a subset of the data vectors 109.

The similarity-and-ranking module 115 provides a list 116 of identified data vectors to a data-item lookup module 117. The lookup module 117 sends lookup requests 118 to the database 104 requesting the data items that are represented by the list 116 of data vectors. It receives part or all of each requested data item as response data 119. The lookup module 117 uses the data items provided in the response 119 to produce an output 106 from the retrieval module 103, which may comprise an ordered list of data items, ordered based on relevance to the query 101. As depicted in FIG. 1, the user interface 102 can present part or all of the output 106 to a user.

The following will provide more details on the operation of the system 100 with reference to FIGs 1 and 2.

The query 101 in this example is a string of text: "Articles by Albert Einstein". However, the query 101 could, in this or other embodiments, be a different text string or could be of a different data format, such as being an image or an audio recording. In one example, the data items 105 comprise scientific articles (i.e. documents that are predominantly text-based). However, they could be other text-based works of a different data format, such as images or audio recordings. The data items 105 may comprise metadata, such as an author field, a publishing date, journal name, etc..

In order to perform a vector search, the data items 105 are first converted into respective data vectors. As mentioned above, this is performed by the pre-trained data-embedding model 108. Before passing the data items 105 to the pre-trained data-embedding model 108, the data items 105 are first optionally provided to the data pre-processor 107. The data pre-processor 107 is used as a first stage in the processing of the data items 105. For example, the data items 105 stored in the database 104 might not be in the correct format for the pre-trained data-embedding model 108 to embed. Therefore, the data pre-processor 107 may receive each data item 105 from the database 104 and, in this example, segment each data item 105 as appropriate. This may involve separating the various fields of a respective data item and/or extracting useful data labels from the data item. For example, the data labels may comprise a topic of the article, a title, or an abstract. Important paragraphs that can be embedded may be extracted as a data label.

Once the pre-trained data-embedding model 108 receives the pre-processed data items, it generates a data vector to represent each data item, such that every data item in the database 104 can be identified based on its respective data vector. This may comprise generating an n-dimensional vector of floating-point values for each data item. Each data vector is generated so that the plurality of data vectors 109 are all part of the same (i.e. a common) vector embedding space.

The query 101 is processed in the following manner. Firstly, the query 101 is optionally passed to the query pre-processor 110, which completes an initial processing of the query 101 before it is embedded as a vector. For example, the query 101 might not be in a format that is immediately compatible with the query-embedding model 111 or the non-deterministic-embedding model 112. Therefore, the query pre-processor 110 receives the query 101 and, in this example, semantically segments the query 101. The output from the query pre-processor 110 thus contains keywords from the original query 101, which in this example may be: "articles" and "Albert Einstein". The query pre-processor 110 may perform other operations to the query 101, either in addition or in alternative to semantically segmenting the query, such as truncating the query if it is too long. In some embodiments, the query may be chunked to generate a plurality of chunks, and a separate search may be performed for each chunk, with respective result lists for each chunk then being combined to provide a final list.

In some examples, the query pre-processor 110 may perform translation and/or spelling correction of the query 101. The query pre-processor 110 may, in addition or in alternative to translating, correcting or semantically segmenting the query 101, perform named entity recognition (NER) on the query 110 to identify filters from the query. Performing NER may allow the query pre-processor to identify locations, dates, times, etc. from the query 101. The filters identified from NER may be used to filter the final results from the search, for example filtering by country.

Once the query 101 has been pre-processed, it is provided to the query-embedding model 111. The query-embedding model 111 generates a single vector based on the output from the query pre-processor 110. As with the data vectors 109, the single vector 111a is an n-dimensional vector of floating-point values and may be embedded within the same embedding space as the data vectors 109.

In other embodiments, hidden states from the query-embedding model 111 may be provided to the non-deterministic-embedding model 112. This may give richer information about the query 101, but with greater computationally expense. These hidden states may optionally be pooled into the same embedding provided by the query-embedding model 111.

In other embodiments, the query-embedding model 111 may comprise a large language model (LLM) and hidden states from the LLM may be used for training the non-deterministic-embedding model 112.

In some embodiments, the query-embedding model 111 may be the same model as the data-embedding model 108. The single vector 111a is then provided to the non-deterministic-embedding model 112. The non-deterministic-embedding model 112 may be a standard or novel type of generative model. It may comprise an artificial neural network. Any of various kinds of trained model may be used to introduce desirable non-determinism to the embedded vector 111a, such as a variational autoencoder, or an auto-regressive model, or a diffusion-based model, etc..

The non-deterministic-embedding model 112 receives the single vector 111a from the query-embedding model 111 and also receives or generates a plurality of random values 113, which may be sampled from a common distribution (e.g. a Gaussian distribution, or a binomial distribution). Each randomly-generated value is used by the model to generate a respective non-deterministic query vector 114. A plurality of query vectors 114 are generated by the non-deterministic-embedding model 112 in response to the same vector 111a, forming a distribution of vector embeddings of the query 101.

The random values 113 may be stored and/or generated within the non-deterministic-embedding model 112 or may be received as inputs from outside the non-deterministic-embedding model 112. The system 100 may comprise a true or pseudo random number generator for generating the random values 113, or they may be pre-generated and stored in a memory, or received from outside the system 100.

The non-deterministic-embedding model 112 is shown here as receiving a plurality of random values 113 in parallel and outputting a plurality of query vectors 114 in parallel; however, in some embodiments the non-deterministic-embedding model 112 may be configured to output a single randomised query vector 114 at a time, and may be used repeatedly to generate the plurality of query vectors 114 as a succession of query vectors 114 over time.

Any number of query vectors 114 may be processed by the similarity-and-ranking module 115. This may, in some examples, be around 50 to 100 vectors, or there may be up to around 1000 query vectors or more. This number may be much smaller than the number of data vectors 109 (e.g. of different orders of magnitude). For example, there may be many millions of data vectors 109.

The non-deterministic-embedding model 112 is configured and trained so that the generated query vectors 114 are embedded within the same common embedding space as the data vectors 109. It is therefore possible and semantically meaningful to compute distances, angles, etc. between the query vectors 114 and the data vectors 109.

The similarity-and-ranking module 115 uses the query vectors 114 and the data vectors 109 to determine a respective similarity value for every unique pairing of one query vector 114 and one data vector 109. The similarity value represents the similarity between the data vector and the query vector 114. The similarity value can take any suitable form, and be determined in any suitable way. In some examples, the similarity value is a distance between the data vector and the query vector under a distance measure (e.g. a distance metric). Since the query vectors 114 and the data vectors 109 are n-dimensional, each determined distance is a distance in n-dimensions. The embedding models 108, 111, 113 have been trained such that, for any query 101 (e.g. "Articles by Albert Einstein"), the data vectors that are more relevant to the query are likely to be closer to the query vectors 114 than those that are less relevant.

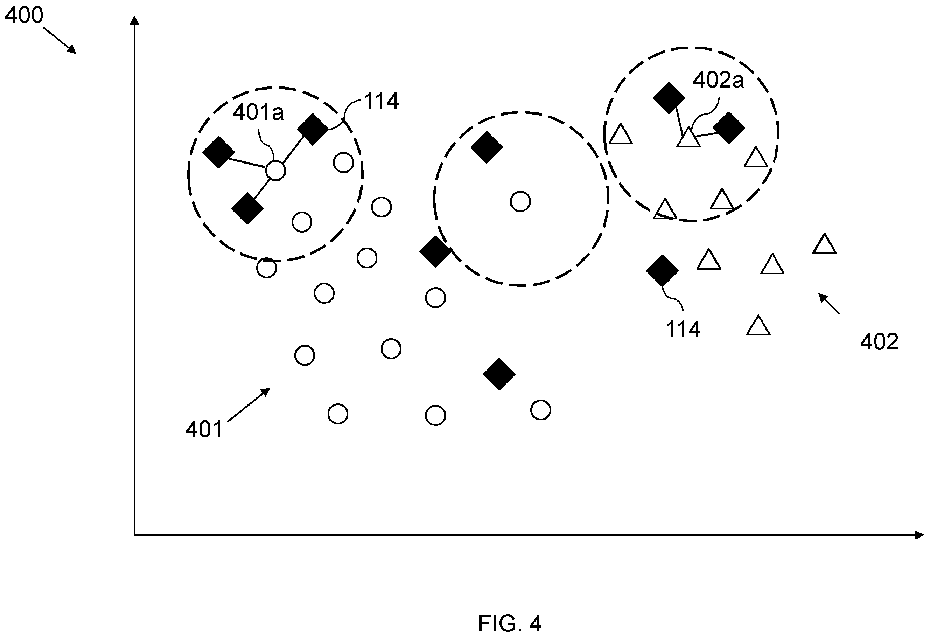

The similarity value could be a Euclidean distance, a cosine similarity, a dot product similarity, or any other suitable measure. It may depend on a combination of two or more of these. The similarity values (e.g. distances) may be used to determine a majority-voting count for each data vector that determines how many query vectors are within a common predetermined threshold distance of the data vector (i.e. based on a distance measure). Thus, data vectors that are nearby several query vectors can be determined to be more relevant than other data vectors. The majority-voting count, or any other statistical or other measure derived from the similarities values, may be used to determine a score for each data vector, and these can be used to determine a list of the most relevant (i.e. highest scoring) data vectors, e.g. as explained in more detail below with reference to FIG. 4.

In other embodiments, the similarities values may additionally or alternatively be processed in other ways to determine a score of each data vector-e.g. by calculating, for each data vector, an average (e.g. mean or median) distance to some or all of the query vectors, and/or calculating a likelihood of each data vector under the model distribution.

Once the similarity-and-ranking module 115 has calculated the similarity values or scores, it processes them in order to identify a set of one or more of the data vectors 109. The set contains one or more data vectors that are determined to be most relevant to the query 101 based on the determined similarity values. If the similarity values are distances, the set may be produced by determining which data vectors are within a predetermined distance of any query vector, with the data vectors having the smallest distance to any query vector being most relevant, or it may be determined by majority-voting as described above, or in any other appropriate way. The same or a different similarity value may be used by the similarity-and-ranking module 115 to rank the set in order of relevance in order to generate a list (i.e. ordered set) 116 of data vectors.

The list 116 is provided to the lookup module 117. Based on the list 116 of data vectors, the lookup module 117 sends lookup requests 118 to the database 104 to request the data items, or elements thereof, that correspond to the data vectors of the list 116. The database 104 sends response data 119 with the requested data items. The lookup module 117 then uses the information to provide the output 106 in the form of an ordered list of retrieved data items, ranked by their relevance to the original query 101. As depicted in FIG. 1, an exemplary output 106 lists articles "A", "B", and "C", with article "A" being determined to be most relevant to the query 101.

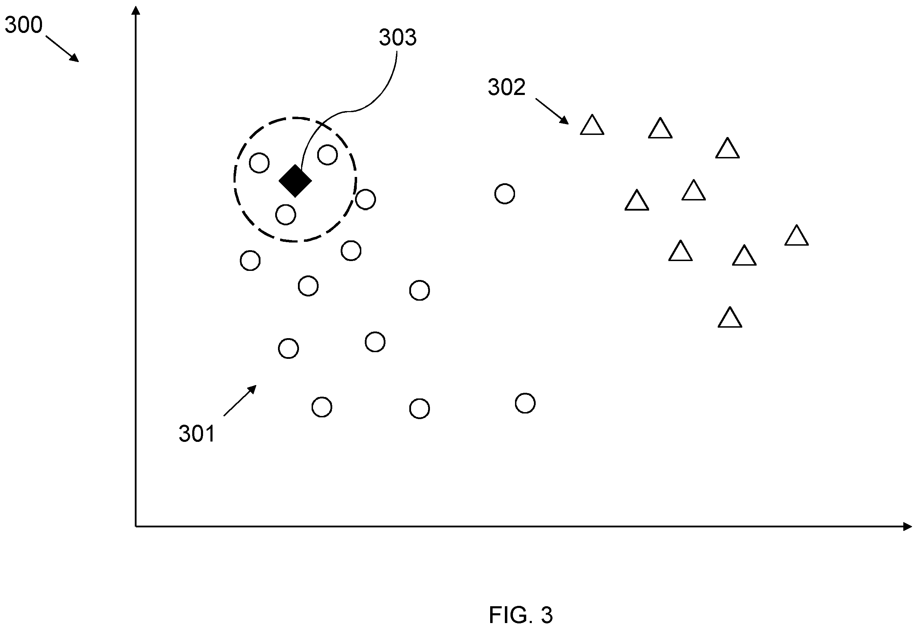

FIGs. 3 and 4 will now compare an approach to data retrieval based on simplistic principles to a method of data retrieval embodying the present invention.

FIG. 3 is a simplified representation of data retrieval based on a simplistic approach. An embedding space 300 contains data vectors that can be searched with a query. For simplicity, the embedding space 300 shown in FIG. 3 is two-dimensional, but in practice the embedding space will generally be of much higher dimension. FIG. 3 shows a first group of data vectors 301 (shown as circular points 301 in FIG. 3) and a second group of data vectors 302 (shown as triangular points in FIG. 3). Each data vector of the first group of data vectors 301 embeds a data item in the database belonging to a first topic, and each data vector of the second group of data vectors 302 embeds a data item in the database belonging to a second topic. For example, the first group of data vectors 301 may embed scientific articles on quantum mechanics, whereas the second group of data vectors 302 may embed scientific articles on general relativity. In this example, the data items associated with the first and second group of data vectors 301, 302 contain an author field (e.g. Albert Einstein, Neils Bohr, etc.). The author field of the data items, as well as the rest of the content of each data item, will affect how the data vectors 301, 302 are embedded in the embedding space 300 (e.g. by a data-embedding model). This example is purely exemplary, and the data items may be of any data type. Since the two groups of data vectors 301, 302 are associated with different topics, the two groups are embedded in different regions of the embedding space 300. In FIG. 3, the two groups of data vectors 301, 302 are not shown to overlap, but this is possible depending on the data items embedded.

As part of the simplistic approach shown in FIG. 3, a single query vector 303 is embedded in the embedding space 300. The query vector 303 is generated in association with a query which, in this example, is the text string: "Articles by Albert Einstein" (i.e. the same as the exemplary query 101). The simplistic approach uses the query to retrieve relevant data items based on the query vector 303 and the data vectors 301, 302. When determining a set of data vectors based on the query, the simplistic approach considers which data vectors are within a predetermined n-dimensional Euclidean distance to the query vector 303. This is shown by a dotted circle in FIG. 3. The data vectors that are within the dotted circle are considered to be relevant enough to the query vector 303 to be used to retrieve the associated data items.

Since some of the data vectors 301, 302 represent scientific articles with an author field of Albert Einstein, the simplistic approach would ideally return results from both groups of data vectors 301, 302 given the query. However, the simplistic approach only identified some of the first group of data vectors 301 as relevant to the query. The second group of data vectors 302 were entirely missed from the data retrieval. It can therefore be seen that the simplistic approach does not adequately search the embedding space 300.

Methods according to the present disclosure may perform better. FIG. 4 shows a simplified representation of an approach to data retrieval according to an embodiment of the invention. It refers to some of the elements from FIGs. 1 and 2. Similar to the situation shown in FIG. 3, a common embedding space 400 contains a first group of data vectors 401 and a second group of data vectors 402 (shown in FIG. 4 as circles and triangles respectively). The first and second group of data vectors 401, 402 are generated by the data-embedding model 108 based on the data items 105, as described above (i.e. the data vectors 401, 402 are respective subsets of the plurality of data vectors 109). Unlike with FIG. 3, in FIG. 4 the query 101 has been non-deterministically embedded into the common embedding space 400 as a plurality of query vectors 114 (shown as nine black diamonds in FIG. 4). As explained above, the query vectors 114 are generated, using randomly-generated values 113, by a specially-trained non-deterministic-embedding model 112 to create a distribution of vector embeddings based on the query 101. It can be seen in FIG. 4 that the query vectors 114 collectively span more of the common embedding space 400 than the single vector 303 in FIG. 3.

FIG. 4 illustrates how the method may determine the list 116 of data vectors. The similarity values in this example are the distances from each query vector 114 to each data vector 401, 402. When determining the list 116, the similarity-and-ranking module 115 processes the determined distances to determine a majority-voting count for each data vector. The value of the majority-voting count for a data vector depends on how many query vectors are within a predetermined threshold distance of the data vector. As is shown in FIG. 4, the data vector 401a has three query vectors within a threshold distance (represented by the dashed circle) of the data vector 401a, and the data vector 402a has two query vectors within the same distance of the data vector 402a. The other data vectors within the common embedding space 400 have only one or zero query vectors within the threshold distance, and so will have a lower or zero majority-voting count. By contrast, the data vectors 401a, 402a have a high majority-voting count, with the majority-voting count of the data vector 401a being the highest. The majority-voting count may be used to determine a score for each data vector 109. The score could simply equal the majority-voting count, or may additionally depend on one or more further factors. The data vectors 109 may be ranked by their score, and only those above a predetermined threshold may be selected for inclusion in the list 116. In this example, the data vectors 401a, 402a will be determined to be part of the list 116. The lookup module 117 then requests the corresponding data items for the data vectors on the list 116, and the output 106 will therefore comprise the data items represented by the data vectors 401a, 402a, ordered in terms of their score. The data item embedded by the data vector 401a may appear first in the ordered list.

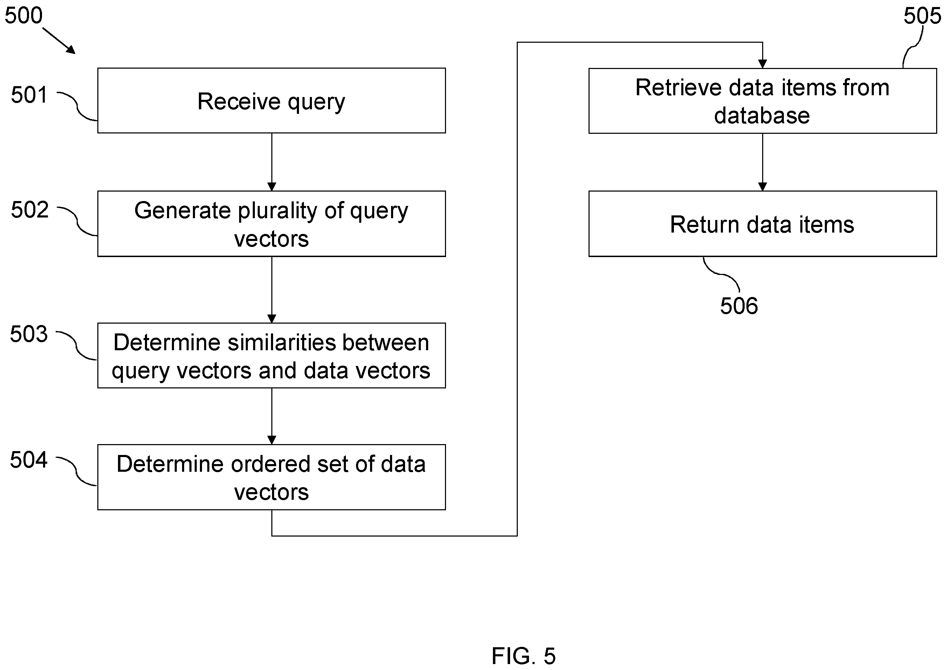

FIG. 5 is a flowchart 500 showing the steps of a method of retrieving data from a database according to an embodiment of the present invention. At step 501, a query is received (e.g. the query 101 described above). As mentioned above, the query can take many formats, such as a string of text.

At step 502, a plurality of query vectors is generated based on the query. This is done by a trained embedding model as described above, which uses randomly-generated values to generate a distribution of query vector embeddings within the common embedding space.

At step 503, pairwise similarity values between the query vectors and the data vectors are determined. The data vectors occupy the common embedding space along with the query vectors (e.g. like query vectors 114 and the data vectors 109 described above). Determining the similarity values allows for the method to find the data vectors that are potentially relevant to the original query.

At step 504, an ordered set (i.e. a list) 116 of data vectors is determined. This determination is based on the similarity values determined in step 503. For example, the data vectors that are within a predetermined distance to a query vector can be determined to be most relevant to the query, and therefore are added to the ordered set, with the closest data vectors being ranked higher than more distant ones.

At step 505, the ordered set is used to retrieve data items from the database 104. The data items that are embedded as the data vectors of the list 116 are the data items considered most relevant to the original query 101, and so these data items are retrieved from the database.

At step 506, the retrieved data items are returned to the user. This example method thus uses a single query to embed multiple query vectors to search a broader portion of a common embedding space, determined which data vectors are relevant to the query, and returns the associated data items to the user, ranked in terms of most relevant to least relevant.

The present disclosure extends to a method of training a non-deterministic-embedding model 112 for generating pluralities of query vectors. The following provides a description of a method of training a diffusion-type non-deterministic-embedding model 112. Some aspects of training the embedding model may be different when using a different type of model. Nevertheless, based on the teaching herein, determining suitable training to suit the type of model is within the capability of the skilled person.

The training of the non-deterministic-embedding model 112 may use a pre-trained data-item-embedding model 108 for embedding the data items, and may use the pre-trained query-embedding model 111 for embedding the labels. Alternatively, a query-embedding model (to which the labels are input) may be trained end-to-end with the non-deterministic-embedding model 112, or it may be integral with the non-deterministic-embedding model 112, e.g. with the non-deterministic-embedding model 112 learning directly from tokenised text output by the query pre-processor 110.

During training, the pre-trained data-item-embedding model 108 receives a plurality of training data items (e.g. from the database 104 or from elsewhere), and generates a data vector 109 for each data item within a common embedding space.

Each training data item is paired with a respective data label (e.g. labelled by a human operator). Each data label may be in the format of a query (e.g. a text string), or one or more keywords or keyphrases, specific to the paired data item. The data labels may comprise metadata for the associated data item (e.g. a title of an article). The data labels may be of a same or a different data type to the data items. For example, the data labels may be strings of text (e.g. descriptions), and the data items may be images. Alternatively, the data labels and the data items may be of the same data type (e.g. both being text).

Where present, the pre-trained query-embedding model operates on the data labels to generate a plurality of label vectors, such that each label vector corresponds to a respective data vector. The label vectors are also within the same common embedding space.

During training, a plurality of randomly-generated values is sampled from a common distribution (e.g. from the same distribution mentioned above), and used to apply random adjustments to the training data vectors 109 (e.g. translating or rotating them by a small random amount), thereby producing a plurality of randomly-adjusted data vectors. In some embodiments, the training data may be augmented by generating fake <query, data> training pairs by selecting, from one or more of the training data items, a random segment from a portion of the data item to use as a training query (i.e. as a training label). When the training data items comprise text (e.g. scientific articles), the random segment may be a sentence from a larger paragraph, and the paragraph may serve as a further training data item for the training.

The non-deterministic-embedding model 112 is then trained, for each adjusted data vector and its associated label vector (i.e. simulated query vector), to learn to map the label vector, when received as input, onto the data vector within the common embedding space. The training may involve applying a plurality of random adjustments to the same data vector - i.e. using the same data vector in multiple training rounds, but with different random adjustments.

The invention has been illustrated by describing one or more specific embodiments thereof, but is not limited to these embodiments; many variations and modifications are possible, within the scope of the accompanying claims.

## Claims

1. A computer-implemented method of retrieving data from a database (104), the method comprising:
receiving (501) a query (101);
generating (502) a plurality of query vectors from the query (101) using a trained non-deterministic-embedding model (112), wherein the non-deterministic-embedding model (112) is configured to generate each query vector as a respective vector in a common embedding space in dependence on the query (101) and a respective randomly-generated value (113);
for each of a plurality of data vectors within the common embedding space, wherein each data vector (109) is associated with a respective data item (105) of the database (104), determining (503), for each of the plurality of query vectors (114), a respective similarity value indicative of a similarity of the data vector (109) to the query vector (114);
processing the determined similarity values to identify (504) a set of one or more of the plurality of data vectors (109); and
retrieving (505), from the database (104), the respective data item (105) associated with each data vector of the set.

2. A computer-implemented method as claimed in claim 1, further comprising receiving the query (101) from a user, and outputting (506) to the user part or all of each data item (105) associated with each respective data vector of the set.

3. A computer-implemented method as claimed in claim 1 or 2, further comprising inputting the query (101) to a trained query-embedding model (111), wherein the trained query-embedding model (111) is configured to generate a vector (114) embedding of the query (101).

4. A computer-implemented method as claimed in any preceding claim, further comprising generating the plurality of data vectors (109) using a trained data-embedding model (108), wherein the trained data-embedding model (108) is configured to generate a respective data vector (109) for each respective data item (105).

5. A computer-implemented method as claimed in any preceding claim, further comprising pre-processing the received query (101) to produce a processed query, and providing the processed query (101) to the non-deterministic-embedding model (112).

6. A computer-implemented method as claimed in any preceding claim, wherein the similarity values are distances determined using a distance measure, and wherein the method further comprises, for each of the plurality of data vectors (109), determining, for each of the plurality of query vectors (114), a respective distance between the query vector (114) and the data vector (109); and wherein identifying the set of one or more of the plurality of data vectors (109) comprises processing the determined distances to find a set of one or more of the plurality of data vectors (109) that are within a predetermined threshold distance of at least a respective one of the plurality of query vectors (114).

7. A computer-implemented method as claimed in any preceding claim, wherein the non-deterministic embedding model (112) is configured to receive or generate, and to process, the plurality of randomly-generated values (113) in parallel, and is configured to generate the plurality of query vectors (114) in parallel.

8. A computer-implemented method as claimed in any preceding claim, wherein the query (101) and the data items (105) comprise text data.

9. A computer-implemented method as claimed in any preceding claim, wherein at least one, or each, of the data vectors of the identified set is identified in dependence upon respective similarities of the data vector to two or more, or all, query vectors of the plurality of query vectors (114).

10. A computer-implemented method as claimed in any preceding claim, wherein identifying the set of one or more of the plurality of data vectors (109) comprises determining an ordered set of one or more of the plurality of data vectors (109).

11. A computer-implemented method as claimed in claim 10, further comprising processing the determined similarity values to determine a majority-voting count for each data vector of the set, and determining an ordering of the ordered set in dependence upon the determined majority-voting counts.

12. A computer-implemented method as claimed in claim 10 or 11, wherein determining the ordered set comprises determining, for each data vector of the set, a respective average distance between the data vector and the plurality of query vectors (114), and determining an ordering of the ordered set in dependence upon the determined average distances.

13. A computer-implemented method as claimed in any one of claims 10 to 12, wherein determining the ordered set of one or more of the plurality of data vectors (109) comprises computing likelihoods of the data vectors of the set or plurality under the model distribution, and determining an ordering of the ordered set in dependence upon the computed likelihoods.

14. A processing system (100) comprising one or more processors and a memory storing software instructions for execution by the one or more processors, wherein the processing system is configured to perform a method of retrieving data according to any one of claims 1 to 13.

15. Software comprising instructions that, when executed by a processing system, cause the processing system to perform a method of retrieving data according to any one of claims 1 to 13.
